# EUROPÄISCHE PATENTSCHRIFT

(11) **EP 3 548 363 B1**
(45) Veröffentlichungstag und Bekanntmachung des Hinweises auf die Patenterteilung: **14.07.2021**
(21) Anmeldenummer: 17829937.6
(22) Anmeldetag: 30.11.2017
(51) Int. Cl.: B62D 21/15, B62D 25/20

(54) **KAROSSERIE FÜR EIN KRAFTFAHRZEUG MIT EINER BODENBAUGRUPPE, DIE EINEN MITTELTUNNEL AUFWEIST**
BODY FOR A MOTOR VEHICLE HAVING A FLOOR ASSEMBLY, WHICH HAS A CENTER TUNNEL
CARROSSERIE POUR VÉHICULE AUTOMOBILE COMPRENANT UN ENSEMBLE FOND QUI PRÉSENTE UN TUNNEL CENTRAL

(30) Priorität: 30.11.2016 DE 102016223749
(43) Veröffentlichungstag der Anmeldung: 09.10.2019
(73) Patentinhaber: Bayerische Motoren Werke Aktiengesellschaft, 80809 München (DE)
(72) Erfinder: LANDECK, Bastian, 82008 Unterhaching (DE); PELGER, Andreas, 85737 Ismaning (DE); TESCH, Florian, 85591 Vaterstetten (DE)
(86) Internationale Anmeldenummer: PCT/EP2017/080915
(87) Internationale Veröffentlichungsnummer: WO 2018/100031

(56) Entgegenhaltungen:
- EP-A1- 1 876 086
- EP-A2- 0 066 963
- DE-A1-102016 100 392
- JP-A- 2005 247 178
- JP-A- 2006 168 527
- KR-B1- 100 792 911

## Beschreibung

Die vorliegende Erfindung betrifft eine Karosserie für ein Kraftfahrzeug, insbesondere ein Personenkraftfahrzeug, mit einer Bodenbaugruppe, die einen Mitteltunnel aufweist.

Aus der DE 10 2010 011 890 A1 ist ein Kraftfahrzeug mit einem Mitteltunnel bekannt, in dem ein Batteriemodul aufgenommen ist. Der Mitteltunnel ist seitlich mit Längsträgern verstärkt. Eine Trägerplatte, an der das Batteriemodul befestigt ist, ist von unten mit den Längsträgern verschraubt.

Ähnlich der DE 10 2010 011 890 A1 zeigt die DE 10 2012 012 891 A1 ein Fahrzeug mit einem Karosserieboden, in dem ein Mitteltunnel ausgebildet ist. In dem Mitteltunnel ist ein Batteriekasten montiert, dessen Batteriekastenboden wiederum an dem Karosserieboden von unten montiert ist.

Die JP 2005 247178 A offenbart eine Karosserie für ein Kraftfahrzeug mit einer Bodenbaugruppe, die einen Mitteltunnel aufweist, wobei der Mitteltunnel mit einem getrennt ausgebildeten Mitteltunnelquerträger verstärkt ist, wobei der Mitteltunnel zur Aufnahme eines Energiespeichers ausgebildet ist.

Es ist die Aufgabe der vorliegenden Erfindung, eine Karosserie für ein Kraftfahrzeug mit einer Bodenbaugruppe, die einen Mitteltunnel aufweist, zu schaffen, wobei die Bodenbaugruppe mit dem Mitteltunnel hinsichtlich einer Übertragung von Kollisionslasten in eine Fahrzeugquerrichtung verbessert ist.

Diese Aufgabe wird durch eine Karosserie gelöst, die die Merkmale von Patentanspruch 1 aufweist. Vorteilhafte Weiterbildungen der Erfindung sind in den abhängigen Patentansprüchen genannt.

Eine erfindungsgemäße Karosserie für ein Kraftfahrzeug, insbesondere ein Personenkraftfahrzeug, hat eine Bodenbaugruppe, die einen Mitteltunnel aufweist. Der Mitteltunnel ist mit einem getrennt ausgebildeten Mitteltunnelquerträger verstärkt, der stirnseitig an der Bodenbaugruppe abgestützt ist oder, insbesondere in Folge einer Kollisionslast, stirnseitig an der Bodenbaugruppe abstützbar ist.

Der Mitteltunnelquerträger dient insbesondere zur Aufnahme einer Kollisionslast in eine Längsrichtung des Mitteltunnelquerträgers, d.h. in eine Fahrzeugquerrichtung/Karosseriequerrichtung.

Vorteilhaft wird in einem seitlichen Kollisionslastfall die Kollisionslast über den Mitteltunnelquerträger durch dessen stirnseitige Abstützung an der Bodenbaugruppe von einer Seite der Bodenbaugruppe zur anderen Seite der Bodenbaugruppe geleitet.

Hierdurch, d.h. durch die stirnseitige Abstützung, können größere Kollisionslasten über den Mitteltunnelquerträger übertragen werden. Die stirnseitige Abstützung kann im Montagezustand der Karosserie gegeben sein oder kann sich im Verlaufe der Kollision durch Verformung der Karosserie entwickeln.

Der Ausdruck "stirnseitig abstützbar" bedeutet insbesondere, dass der Mitteltunnelquerträger eine Stirnseite, d.h. eine Fläche senkrecht zur Längserstreckung des Mitteltunnelquerträgers an einem Ende des Mitteltunnelquerträgers aufweist, über die eine Abstützung des Mitteltunnelquerträgers erfolgt. Es handelt sich also um eine flächige Abstützung des Mitteltunnelquerträgers über eine Stirnseite.

Gemäß einer bevorzugten Weiterbildung ist der Mitteltunnelquerträger an seinen beiden Stirnseiten an der Bodenbaugruppe abgestützt.

Hierdurch ist die Übertragung von Kollisionslasten in beide Richtungen des Mitteltunnelquerträgers ermöglicht.

Bevorzugt hat die Bodenbaugruppe einen linken Bodenquerträger und einen rechten Bodenquerträger, wobei der Mitteltunnelquerträger mit seiner linken Stirnseite an dem linken Bodenquerträger und mit seiner rechten Stirnseite an dem rechten Bodenquerträger abgestützt ist.

Der linke Bodenquerträger kann ein linker Sitzquerträger sein und der rechte Bodenquerträger kann ein rechter Sitzquerträger sein. Mit den Sitzquerträgern sind insbesondere Fahrzeugsitze des Kraftfahrzeugs verbunden.

Bevorzugt ist der Mitteltunnelquerträger mit der Bodenbaugruppe lösbar verbunden.

Beispielsweise ist der Mitteltunnelquerträger über eine Schraubverbindung lösbar mit der Bodenbaugruppe verbunden.

Bevorzugt ist an der Unterseite der Bodenbaugruppe ein Vorsprung ausgebildet, an dem die Stirnseite des Mitteltunnelquerträgers abgestützt ist oder abstützbar ist.

Dabei kann eine Abstützfläche des Vorsprungs komplementär zur Stirnseite des Mitteltunnelquerträgers ausgebildet sein.

Der Vorsprung kann dabei bevorzugt von der Bodenbaugruppe nach unten ragen.

Der Vorsprung der Bodenbaugruppe ist insbesondere stoffschlüssig bzw. integral mit der Bodenbaugruppe ausgebildet.

Gemäß einer bevorzugten Weiterbildung erstreckt sich der Mitteltunnel der Karosserie in eine Kraftfahrzeuglängsrichtung. Der Mitteltunnel ist ferner üblicherweise in die Fahrzeugquerrichtung mittig angeordnet.

Der Mitteltunnel ist zur Aufnahme eines Energiespeichers ausgebildet. Ein Energiespeicher kann bspw. eine Batterie oder ein Kraftstoffbehälter, insbesondere ein Druckbehälter, sein. Der Druckbehälter kann bevorzugt zur Speicherung von Wasserstoff unter Druck, gegebenenfalls bei sehr niedriger Temperatur (ein derartiger Behälter wird üblicherweise Kryodruckbehälter genannt), ausgebildet sein.

Erfindungsgemäß ist der Mitteltunnelquerträger mit dem Energiespeicher lösbar verbunden.

Ferner kann die Bodenbaugruppe mit einem linken Seitenschweller und einem rechten Seitenschweller verbunden sein.

Der Mitteltunnel bildet bevorzugt einen im Querschnitt im Wesentlichen U-förmigen nach unten offenen Kasten.

Die Bodenbaugruppe kann Bodenbleche aufweisen, die den Boden der Karosserie bzw. der Fahrgastzelle bilden.

Der Mitteltunnel kann sich in dem Bereich der Fahrgastzelle von einer vorderen Stirnwand bis hin zu einem Bereich vor der Hinterachse erstrecken.

Der Mitteltunnelquerträger kann im Wesentlichen plattenförmig oder auch strebenförmig ausgebildet sein. Im Falle der strebenförmigen Ausbildung des Mitteltunnelquerträgers ist es je nach Länge des Mitteltunnels vorteilhaft, drei bis fünf Mitteltunnelquerträger in Längsrichtung beabstandet zueinander vorzusehen.

Bevorzugt besteht der Mitteltunnelquerträger aus einem Aluminiumstrangpressprofil. Ein Aluminiumstrangpressprofil ist hinreichend leicht, kann einfach hergestellt werden und kann die notwendige Steifigkeit aufweisen. Alternativ kann der Mitteltunnelquerträger auch aus Stahl oder einem Faserverbundwerkstoff ausgebildet sein. Ferner kann der Mitteltunnelquerträger in Hybridbauweise aus mehreren Materialien ausgebildet sein.

Vorstehend genannte Weiterbildungen der Erfindung sind, soweit möglich und sinnvoll, beliebig miteinander kombinierbar.

Es folgt eine Kurzbeschreibung von Figuren.
Fig. 1 ist eine schematische Schnittansicht in eine Fahrzeugquerrichtung und eine Fahrzeughochrichtung und zeigt eine Bodenbaugruppe einer Fahrzeugkarosserie gemäß einem Ausführungsbeispiel der vorliegenden Erfindung.
Fig. 2 ist eine vergrößerte schematische Schnittansicht in die Fahrzeugquerrichtung und die Fahrzeughochrichtung eines Teils der Bodenbaugruppe gemäß dem Ausführungsbeispiel der vorliegenden Erfindung.
Fig. 3 ist eine vergrößerte schematische Schnittansicht in die Fahrzeugquerrichtung und die Fahrzeughochrichtung der Bodenbaugruppe gemäß dem Ausführungsbeispiel der vorliegenden Erfindung, wobei eine Befestigung eines Druckbehälters an dem Mitteltunnelquerträger gezeigt ist,.

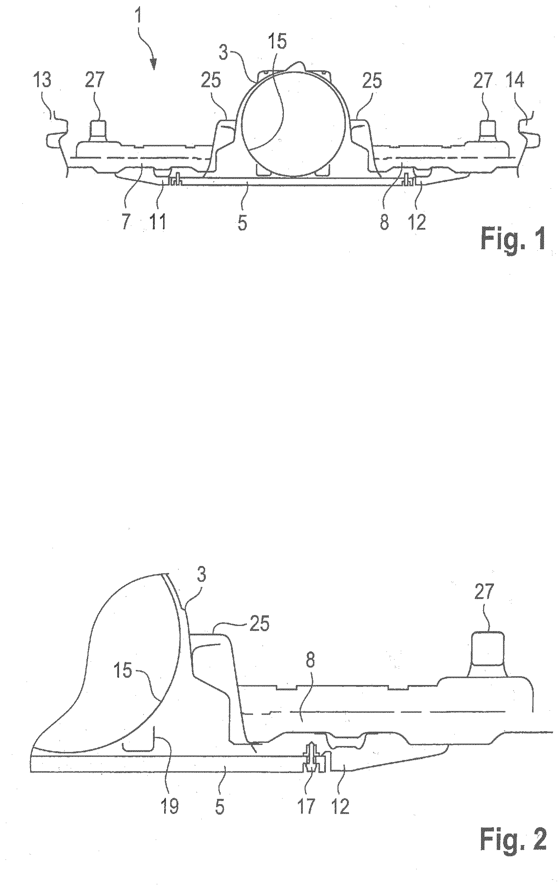

Es folgt eine detaillierte Beschreibung eines Ausführungsbeispiels der vorliegenden Erfindung unter Bezugnahme auf Figuren 1 bis 3.

Fig. 1 zeigt eine Schnittansicht eines Teils einer Karosserie eines Personenkraftfahrzeugs. Die Karosserie weist insbesondere eine Bodengruppe 1 auf, in der ein Mitteltunnel 3 integriert ist. Die Bodenbaugruppe 1 hat einen linken Sitzquerträger 7 und einen rechten Sitzquerträger 8, die sich jeweils zwischen dem Mitteltunnel 3 und einem linken Seitenschweller 13 bzw. einem rechten Seitenschweller 14 erstrecken. Der Mitteltunnel 3 ist in Form eines Kastens ausgebildet, der die Gestalt eines umgedrehten U hat. Demnach ist der Mitteltunnel 3 nach unten geöffnet. An einer Unterseite der Bodenbaugruppe 1 sind beabstandet zueinander mehrere Mitteltunnelquerträger 5 angeordnet, wobei in Fig. 1 lediglich ein Mitteltunnelquerträger 5 zu sehen ist. Der Mitteltunnelquerträger 5 ist mittels einer Schraubverbindung mit dem linken Sitzquerträger 7 bzw. dem rechten Sitzquerträger 8 verbunden. An einer Unterseite des linken Sitzquerträgers 7 ist ein Vorsprung 11 ausgebildet. Ebenso ist an einer Unterseite des rechten Sitzquerträgers 8 ein Vorsprung 12 ausgebildet. Der Mitteltunnelquerträger 5 ist beispielsweise aus einem Aluminium Strangpressprofil gebildet.

Der Mitteltunnelquerträger 5 hat eine linke Stirnseite und eine rechte Stirnseite. Die linke Stirnseite des Mitteltunnelquerträgers 5 liegt dem Vorsprung 11 gegenüber. Die rechte Stirnseite des Mitteltunnelquerträgers 5 liegt dem Vorsprung 12 gegenüber.

In dem Mitteltunnel 3 ist ein Druckbehälter 15 angeordnet, der sich im Wesentlichen über eine gesamte Länge des Mitteltunnels 3 erstreckt. Der Druckbehälter 15 kann bspw. zur Aufnahme von Wasserstoff ausgebildet sein, der zum Antrieb einer Brennkraftmaschine oder einer Brennstoffzelle dient. Das Personenkraftfahrzeug kann demnach ein elektrisch angetriebenes Kraftfahrzeug mit einer Brennstoffzelle sein, deren Brennstoff in Form von Wasserstoff in dem Druckbehälter 15 gespeichert ist.

In Fig. 2 ist eine vergrößerte Ansicht der in Fig. 1 gezeigten Schnittansicht, wobei eine Schraubverbindung 17 erkennbar ist, mittels der der Mitteltunnelquerträger 5 an dem rechten Sitzquerträger 8 befestigt ist. Ebenso ist eine Schraubverbindung zwischen dem linken Sitzquerträger 7 und dem Mitteltunnelquerträger 5 ausgebildet. Ferner ist in Fig. 2 deutlicher erkennbar, wie die rechte Stirnseite des Mitteltunnelquerträgers 5 dem Vorsprung 12 gegenüber liegt. Ebenso liegt die linke Stirnseite des Mitteltunnelquerträgers 5 dem Vorsprung 11 gegenüber.

Die Bodenbaugruppe 1 weist eine Konsole 25, die seitlich mit dem Mitteltunnel 3 verbunden ist, sowie eine Konsole 27 auf, die unter anderem mit dem zughörigen Sitzquerträger verbunden ist. Die Konsolen 25 und 27 erstrecken sich in Fahrzeuglängsrichtung und dienen zur Anbringung von nicht gezeigten Sitzschienen, die zur längsverschieblichen Lagerung eines ebenfalls nicht gezeigten Fahrzeugsitzes ausgebildet sind. Die Konsolen 25 und 27 sind sowohl auf der linken Seite des Mitteltunnels 3 als auch auf der rechten Seite des Mitteltunnels 3 zur Lagerung eines linken Fahrzeugsitzes bzw. eines rechten Fahrzeugsitzes angeordnet.

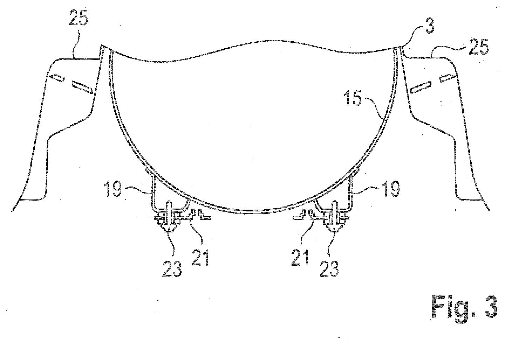

In Fig. 3 ist gezeigt, dass der Druckbehälter 15 Befestigungsfüße 19 aufweist. Die Befestigungsfüße sind mit seitlichen Flanschen 21 des Mitteltunnelquerträgers 5 über Schraubverbindungen 23 mit dem Mitteltunnelquerträger 5 verschraubt. Mit anderen Worten stützt der Mitteltunnelquerträger 5 den Druckbehälter 15 nach unten hin ab und bildet die Befestigung des Druckbehälters 15 mit der Karosserie, d.h. der Bodenbaugruppe 1, aus.

Der Mitteltunnelquerträger 5 hat in Zusammenwirkung mit der Bodenbaugruppe 1 folgende Funktion. Wenn bei einer Seitenkollision des Personenkraftfahrzeugs eine Kollisionslast in Fahrzeugquerrichtung auf die Bodenbaugruppe 1 wirkt, wird die Kollisionslast nicht nur über den Mitteltunnel 3 oberhalb des Druckbehälters 15 zwischen den Sitzquerträgern 7, 8 sondern auch über den Mitteltunnelquerträger 5 unterhalb des Druckbehälters 15 übertragen. Durch die stirnseitige Abstützung des Mitteltunnelquerträgers 5 an den Vorsprüngen 11 und 12, die mit den jeweiligen Sitzquerträgern 7, 8 verbunden sind, kann hierbei besonders effizient die Kollisionslast zwischen den Sitzquerträgern 7 und 8 übertragen werden. Mit anderen Worten kann eine größere Kollisionslast zwischen den Sitzquerträgern 7 und 8 als ohne die stirnseitige Abstützung übertragen werden. Ferner hat die Verschraubung des Mitteltunnelquerträgers 5 mit dem Druckbehälter 15 den Vorteil, dass ein Ausknicken des Mitteltunnelquerträgers 5 in Folge der seitlichen Kollisionslast zuverlässig verhindert ist.

Insgesamt wird hierdurch eine Steifigkeit bzw. Festigkeit der Bodenbaugruppe 1 in Fahrzeugquerrichtung deutlich erhöht und der Raum innerhalb des Mitteltunnels 3 ist besser gegenüber Verformung geschützt. Damit ist der in dem Mitteltunnelraum untergebrachte Druckbehälter 15 besser gegenüber Kollisionslasten in Fahrzeugquerrichtung geschützt.

## Patentansprüche

1. Karosserie für ein Kraftfahrzeug mit einer Bodenbaugruppe (1), die einen Mitteltunnel (3) aufweist, wobei der Mitteltunnel mit einem getrennt ausgebildeten Mitteltunnelquerträger (5) verstärkt ist, der zur Aufnahme einer Kollisionslast in eine Längsrichtung des Mitteltunnelquerträgers (5), stirnseitig an der Bodenbaugruppe (1) abgestützt ist oder abstützbar ist, wobei der Mitteltunnel (3) zur Aufnahme eines Energiespeichers (15) ausgebildet ist und wobei der Mitteltunnelquerträger (5) mit dem Energiespeicher (15) lösbar verbunden ist.

2. Karosserie nach Patentanspruch 1, wobei der Energiespeicher (15) als Kraftstoffbehälter in Form eines Druckbehälters ausgebildet ist.

3. Karosserie nach Patentanspruch 2, wobei der Mitteltunnelquerträger (5) mit dem Druckbehälter (15) durch Verschraubung verbunden ist.

4. Karosserie nach Patentanspruch 3, wobei der der Druckbehälter (15) Befestigungsfüße (19) aufweist, die mit seitlichen Flanschen (21) des Mitteltunnelquerträgers (5) über Schraubverbindungen (23) mit dem Mitteltunnelquerträger (5) verschraubt sind.

5. Karosserie nach einem der Patentansprüche 1 bis 4, wobei der Mitteltunnelquerträger (5) an seinen beiden Stirnseiten an der Bodenbaugruppe (1) abgestützt ist oder abstützbar ist.

6. Karosserie nach einem der Patentansprüche 1 bis 5, wobei die Bodenbaugruppe (1) einen linken Bodenquerträger (7) und einen rechten Bodenquerträger (8) aufweist, und der Mitteltunnelquerträger (5) mit seiner linken Stirnseite an dem linken Bodenquerträger (7) und mit seiner rechten Stirnseite an dem rechten Bodenquerträger (8) abgestützt ist oder abstützbar ist.

7. Karosserie nach einem der Patentansprüche 1 bis 6, wobei der Mitteltunnelquerträger (5) mit der Bodenbaugruppe (1) lösbar verbunden ist.

8. Karosserie nach einem der Patentansprüche 1 bis 7, wobei an einer Unterseite der Bodenbaugruppe (1) ein Vorsprung (11, 12) ausgebildet ist, an dem die Stirnseite des Mitteltunnelquerträgers (5) abgestützt ist oder abstützbar ist.

9. Karosserie nach einem der Patentansprüche 1 bis 8, wobei der Mitteltunnel (3) sich in eine Kraftfahrzeuglängsrichtung erstreckt.

10. Karosserie nach einem der Patentansprüche 1 bis 9, wobei die Bodenbaugruppe mit einem linken Seitenschweller (13) und einem rechten Seitenschweller (14) verbunden ist.

11. Karosserie nach einem der Patentansprüche 1 bis 10, wobei der Mitteltunnel (3) durch einen in einem Querschnitt im Wesentlichen U-förmigen, nach unten offenen Kasten ausgebildet ist.

## Claims

1. Vehicle body for a motor vehicle with a floor assembly (1) which has a central tunnel (3), the central tunnel being reinforced by way of a central tunnel crossmember (5) of separate configuration which, in order to absorb a collision load in a longitudinal direction of the central tunnel crossmember (5), is supported or can be supported on the end side on the floor assembly (1), the central tunnel (3) being configured to receive an energy store (15), and the central tunnel crossmember (5) being connected releasably to the energy store (15).

2. Vehicle body according to Patent Claim 1, the energy store (15) being configured as a fuel tank in the form of a pressure tank.

3. Vehicle body according to Patent Claim 2, the central tunnel crossmember (5) being connected to the pressure tank (15) by way of a screw connection.

4. Vehicle body according to Patent Claim 3, the pressure tank (15) having fastening feet (19) which are screwed to the central tunnel crossmember (5) by way of lateral flanges (21) of the central tunnel crossmember (5) via screw connections (23).

5. Vehicle body according to one of Patent Claims 1 to 4, the central tunnel crossmember (5) being supported or being capable of being supported on its two end sides on the floor assembly (1).

6. Vehicle body according to one of Patent Claims 1 to 5, the floor assembly (1) having a left-hand floor crossmember (7) and a right-hand floor crossmember (8), and the central tunnel crossmember (5) being supported or being capable of being supported by way of its left-hand end side on the left-hand floor crossmember (7) and by way of its right-hand end side on the right-hand floor crossmember (8).

7. Vehicle body according to one of Patent Claims 1 to 6, the central tunnel crossmember (5) being connected releasably to the floor assembly (1).

8. Vehicle body according to one of Patent Claims 1 to 7, a projection (11, 12) being configured on an underside of the floor assembly (1), on which projection (11, 12) the end side of the central tunnel crossmember (5) is supported or can be supported.

9. Vehicle body according to one of Patent Claims 1 to 8, the central tunnel (3) extending in a motor vehicle longitudinal direction.

10. Vehicle body according to one of Patent Claims 1 to 9, the floor assembly being connected to a left-hand side sill (13) and a right-hand side sill (14).

11. Vehicle body according to one of Patent Claims 1 to 10, the central tunnel (3) being configured by way of a downwardly open box of substantially U-shaped cross section.

## Revendications

1. Carrosserie pour un véhicule automobile, comprenant un module de plancher (1) qui présente un tunnel central (3), le tunnel central étant renforcé par une traverse de tunnel central (5) réalisée séparément et qui prend ou peut prendre appui côté face frontale sur le module de plancher (1) pour absorber une charge de collision dans une direction longitudinale de la traverse de tunnel central (5), le tunnel central (3) étant réalisé pour recevoir un accumulateur d'énergie (15), et la traverse de tunnel central (5) étant reliée de manière amovible à l'accumulateur d'énergie (15).

2. Carrosserie selon la revendication 1, dans laquelle l'accumulateur d'énergie (15) est réalisé comme un réservoir de carburant sous la forme d'un réservoir sous pression.

3. Carrosserie selon la revendication 2, dans laquelle la traverse de tunnel central (5) est reliée au réservoir sous pression (15) par vissage.

4. Carrosserie selon la revendication 3, dans laquelle le réservoir sous pression (15) présente des pieds de fixation (19) qui sont vissés à la traverse de tunnel central (5) à l'aide de brides latérales (21) de la traverse de tunnel central (5) par des assemblages vissés (23).

5. Carrosserie selon l'une quelconque des revendications 1 à 4, dans laquelle la traverse de tunnel central (5) prend ou peut prendre appui sur ses deux faces frontales sur le module de plancher (1).

6. Carrosserie selon l'une quelconque des revendications 1 à 5, dans laquelle le module de plancher (1) présente une traverse de plancher gauche (7) et une traverse de plancher droite (8), et la traverse de tunnel central (5) prend ou peut prendre appui par sa face frontale gauche sur la traverse de plancher gauche (7) et par sa face frontale droite sur la traverse de plancher droite (8).

7. Carrosserie selon l'une quelconque des revendications 1 à 6, dans laquelle la traverse de tunnel central (5) est reliée de manière amovible au module de plancher (1).

8. Carrosserie selon l'une quelconque des revendications 1 à 7, dans laquelle, sur une face inférieure du module de plancher (1), une saillie (11, 12) est réalisée sur laquelle la face frontale de la traverse de tunnel central (5) prend ou peut prendre appui.

9. Carrosserie selon l'une quelconque des revendications 1 à 8, dans laquelle le tunnel central (3) s'étend dans la direction longitudinale du véhicule automobile.

10. Carrosserie selon l'une quelconque des revendications 1 à 9, dans laquelle le module de plancher est relié à un bas de caisse gauche (13) et à un bas de caisse droit (14).

11. Carrosserie selon l'une quelconque des revendications 1 à 10, dans laquelle le tunnel central (3) est réalisé par une caisse ouverte vers le bas, ayant une section transversale substantiellement en forme de U.
